# EUROPÄISCHE PATENTANMELDUNG

(11) **EP 2 381 188 A2**
(43) Veröffentlichungstag der Anmeldung: **26.10.2011**
(21) Anmeldenummer: 11003433.7
(22) Anmeldetag: 26.04.2011
(51) Int. Cl.: F24J 2/52

(54) **Solarmodulmontagesystem und Gebäudeaußenhülle**

(30) Priorität: 23.04.2010 DE 102010018014
(71) Anmelder: Schmidt, Christoph, 91710 Gunzenhausen (DE)
(72) Erfinder: Schmidt, Christoph, 91710 Gunzenhausen (DE)
(74) Vertreter: Pfenning, Meinig & Partner GbR

(57) **Zusammenfassung**

Solarmodulmontagesystem sowie eine Gebäudeaußenhülle, die ein derartiges Solarmodulmontagesystem aufweist, wobei das Solarmodulmontagesystem Einlegeprofile (1) und unter einem Winkel zu den Einlageprofile (1) verlaufende Halteprofile (11) umfasst, wobei Vertiefungen (10a-d;15a,b;21a,b) vorgesehen sind, zur Ableitung von Flüssigkeit längs der Einlegeprofile (1) und der Halteprofile (11).

## Beschreibung

Die vorliegende Erfindung betrifft ein Solarmodulmontagesystem sowie eine Gebäudeaußenhülle, die ein derartiges Solarmodulmontagesystem aufweist.

Üblicherweise werden Photovoltaikmodule (PV-Module) mit einer Aluminium-Unterkonstruktion auf Dächern montiert. Dabei weisen ca. 80 bis 90 % aller PV-Module einen Alurahmen mit folgendem grundsätzlichem Aufbau auf:
- Glasscheibe mit rückseitiger Abdeckung (meist Folie) sowie den dazwischen liegenden Solarzellen und einem umlaufenden Rahmen (meist aus Aluminium). Typische Rahmenhöhe 30 bis 50 mm.

Zur Aufdach-Montage von PV-Modulen und auf Schrägdächern müssen die Module gegen
- Abrutschen durch ihr Eigengewicht,
- Winddruckkräfte und Schneelasten, sowie
- Windsogkräfte
gesichert werden.

Dies geschieht üblicherweise mittels horizontal auf dem Dach verlaufenden Profilen (diese sind mit Dachhaken auf dem Dach befestigt), auf denen die Module mittels Klemmhaltern und Schrauben kraftschlüssig festgeklemmt werden. Alternativ dazu werden auch sog. Einlegesysteme verwendet, die im Prinzip aus Doppel-T-förmigen, horizontal verlaufenden Profilen bestehen, in die die Module eingelegt werden. Die Profilöffnungen der Einlegeprofile müssen so viel Spiel zum Modulrahmen aufweisen, dass das Einschieben der Modulunterseite (Schritt 3, siehe unten) in der entsprechende Profilöffnung noch möglich ist.

Bei Einlegesystemen werden Windsog- und Winddruckkräfte sowie Schneelasten über die obere und untere Modulkante (Modulrahmen) in die Einlegeprofile eingeleitet. Das Modul wird durch das untere Einlegeprofil am Abrutschen gehindert, es "steht" sozusagen im unteren Einlegeprofil.

Wärmedehnungen des Moduls sowie Montagetoleranzen werden durch den im oberen Einlegeprofil entstehenden Spalt aufgenommen.

Bei herkömmlichen Einlegeprofilen kann zwischen unterem Modulrahmen und Einlegeprofil bzw. oberem Modulrahmen und Einlegeprofil Wasser eindringen.

Systeme des Standes der Technik weisen folgende Nachteile auf:
- Klemmsysteme: u.a. hoher Montageaufwand, zahlreiche Montagekomponenten und Werkzeugbedarf, keine Regendichtheit der Modulfläche,
- Einlegesysteme: zwischen Modulrahmen und Einlegeprofil keine Regendichtheit der Modulfläche.

Für diese bekannten Montagesysteme ist daher jeweils eine separate, regendichte Dachhaut erforderlich.

Es ist daher Aufgabe der vorliegenden Erfindung, ein Solarmodulmontagesystem und eine Gebäudeaußenhülle zu schaffen, bei der eine separate regendichte Dachhaut nicht unbedingt erforderlich ist, da bereits das Solarmodulmontagesystem ausreichend regendicht ist.

Diese Aufgabe wird durch das Solarmodulmontagesystem nach Anspruch 1 sowie nach den hiervon abhängigen Ansprüche und durch die Gebäudeaußenhülle nach Anspruch 8 gelöst.

Erfindungsgemäß weisen die Einlegeprofile und die Halteprofile an ihrem unteren Flansch Vertiefungen - Regenrinnen - auf, über die Flüssigkeiten abgeführt werden können. Dringt nun Flüssigkeit am Rand der Solarmodule vorbei bis zu den Einlegeprofilen und Halteprofilen vor, so läuft sie dort in die Vertiefungen und wird abgeleitet. Dabei leiten die Vertiefungen in den Einlegeprofilen das eindringende Wasser nach links und rechts bis zum nächsten Halteprofil. Dort wird das Wasser in die entsprechende senkrecht verlaufende Vertiefung des Halteprofils geleitet und damit bis zum unteren Ende des Solarmodulmontagesystems geleitet. Dort kann es gesammelt und über Regenrinnen abgeleitet werden oder auf darunter befindliche Dachbereiche aufgeleitet werden.

Das erfindungsgemäße Solarmodulmontagesystem mit den vorzugsweise horizontal und vertikal verlaufenden Einlegeprofilen und Halteprofilen kann nun weiter ausgestaltet werden, insbesondere in Abhängigkeit davon, ob es auf einem Pfetten-Dach oder einem Sparrendach aufgebracht wird.

Die Grundidee der vorliegenden Erfindung ist es also, ein regendichtes Einlegesystem zu schaffen, dessen Profile neben ihrer mechanischen Funktion auch gleichzeitig zum Abführen des zwischen den Modulen bzw. zwischen Einlegeprofilen und Modulen in kleineren Mengen eindringenden Flüssigkeiten, insbesondere Regenwasser, dienen.

Im Folgenden werden einige Beispiele erfindungsgemäßer Solarmodulmontagesysteme beschrieben.

Es zeigt
- Figur 1: ein Einlegesystem nach dem Stand der Technik;
- Figur 2: ein Einlegeprofil gemäß der vorliegenden Erfindung;
- Figur 3: eine Aufsicht auf ein Solarmodulmontagesystem nach der vorliegenden Erfindung;
- Figur 4: ein Halteprofil nach der vorliegenden Erfindung;
- Figur 5: ein Einlegeprofil nach der vorliegenden Erfindung;
- Figur 6: ein Solarmodulmontagesystem nach der vorliegenden Erfindung;
- Figur 7: ein weiteres Solarmodulmontagesystem nach der vorliegenden Erfindung;
- Figur 8: die Befestigung eines Einlegeprofils an einem Dach;
- Figur 9: eine weitere Möglichkeit zur Befestigung eines Einlegeprofils nach der vorliegenden Erfindung; sowie
- Figur 10: eine weitere Befestigungsmöglichkeit nach der vorliegenden Erfindung für ein Solarmodulmontagesystem gemäß der vorliegenden Erfindung.

Die folgenden Beispiele dienen der Erläuterung der Erfindung, wobei diese nicht nur in ihrer Gesamtschau für die vorliegende Erfindung relevant sind, sondern auch einzelne Elemente hieraus für sich alleine als eigene Aspekte der Erfindung betrachtet werden sollen.

Im Folgenden werden in sämtlichen Figuren die folgenden Bezugszeichen verwendet:
- 1: Einlegeprofil
- 1a: Einlegeprofil oben
- 1b: Einlegeprofil unten
- 1c: Einlegeprofil links
- 1d: Einlegeprofil rechts
- 2: Dachschräge
- 3: Solarmodul
- 31: untere umlaufende Seite des Solarmoduls 3
- 32: obere umlaufende Seite des Solarmoduls 3
- 4: Öffnung im oberen Einlegeprofil la
- 5: Hinterschneidung 5 des unteren Einlegeprofils 1b
- 6a: Freiraum zwischen unterem Einlegeprofil und unterer Seite des Solarmoduls
- 6b: Freiraum zwischen oberem Einlegeprofil und oberer Seite des Solarmoduls
- 7: die Öffnung 4 bildende Hinterschneidung
- 8a: unterer Modulrahmen
- 8b: oberer Modulrahmen
- 8c: rechter Modulrahmen
- 8d: linker Modulrahmen
- 9: Regenwasser
- 99: Regenwasser
- 10a-d: Ablaufrinnen-Einlegeprofil
- 11: Halteprofil
- 11a: unteres Halteprofil
- 11b: oberes Halteprofil
- 11c: linkes Halteprofil
- 11d: rechtes Halteprofil
- 111: Verbindungsprofil
- 12: Pfette
- 13: Abstandssicken-Halteprofil
- 14a,b: Schraubkanal-Halteprofil
- 15a, b: Ablaufkanal-Halteprofil
- 16: Dichtungs-Einlegeprofil
- 16a: Dichtungs-Einlegeprofil oben
- 16b: Dichtungs-Einlegeprofil unten
- 17: Bolzen-Halteprofil
- 18: Dichtungs-Halteprofil
- 19: Vorsprungs-Halteprofil
- 20: Dachsparren
- 21: Halteprofil für Variante "Sparrendach"
- 21a: Ablaufrinnen-Halteprofil
- 21b: Ablaufrinnen-Halteprofil
- 22: U-Profil
- 23: Schräge
- 24: untere Profilkante-Einlegeprofil
- 25: obere Profilkante-Einlegeprofil
- 26: untere Auflagefläche
- 27: obere Auflagefläche
- 28: Entwässerungsbohrungen
- 29: Schraube
- 30: Klemmteile
- 31: Haltenase
- 32: Haltebolzen
- 33: Rundung
- 34: Haltestück
- 35: Keilnase
- 36: Keilnase

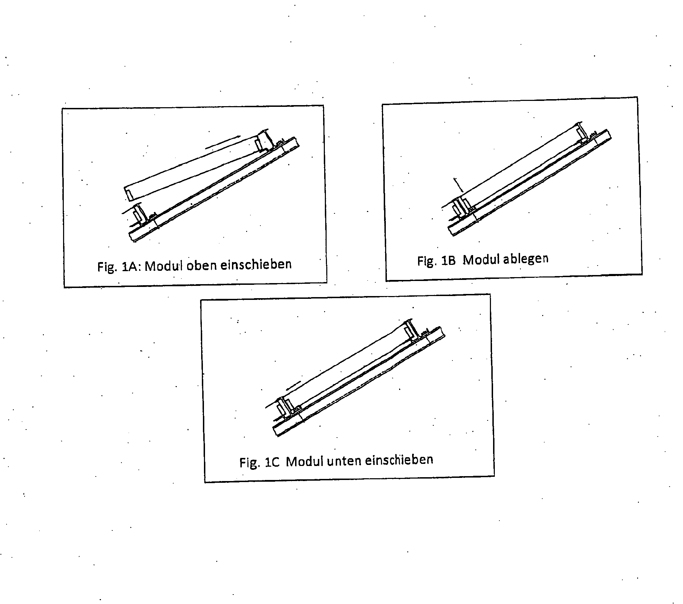

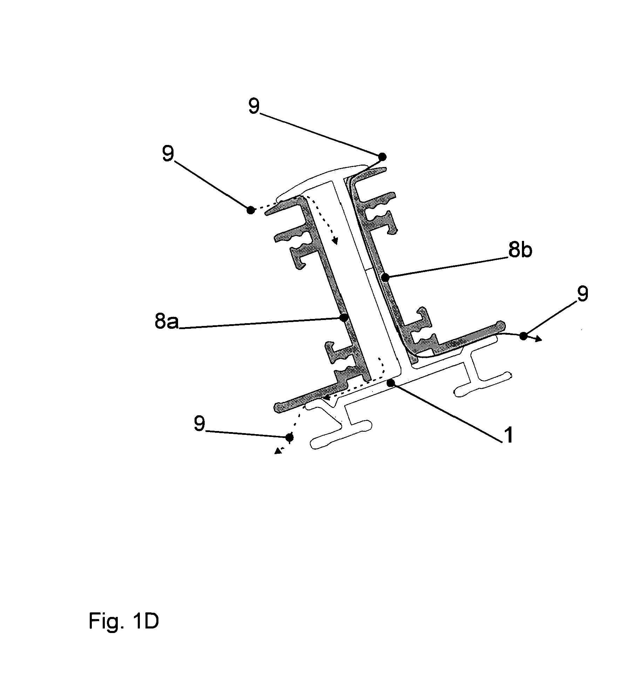

Figur 1 zeigt in den Teilfiguren 1A bis 1C ein Einlegesystem für Solarmodule nach dem Stand der Technik. Ein derartiges Einlegesystem weist horizontal auf dem Dach verlaufende Profile (diese sind mit Dachhaken auf dem Dach befestigt) auf, auf denen die Module befestigt werden. Dazu werden auch sog. Einlegesysteme verwendet, die im Prinzip aus Doppel-T-förmigen, horizontal verlaufenden Profilen bestehen, in die die Module eingelegt werden. Die Profilöffnungen der Einlegeprofile müssen so viel Spiel zum Modulrahmen aufweisen, dass das Einschieben der Modulunterseite, wie in den Figuren 1A bis 1C gezeigt, in der entsprechenden Profilöffnung noch möglich ist.

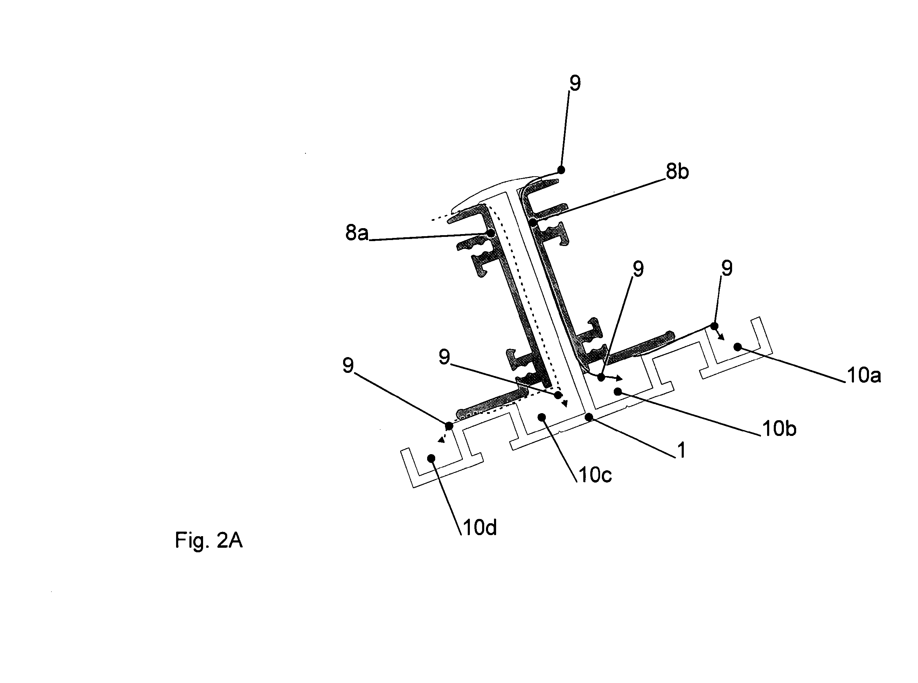

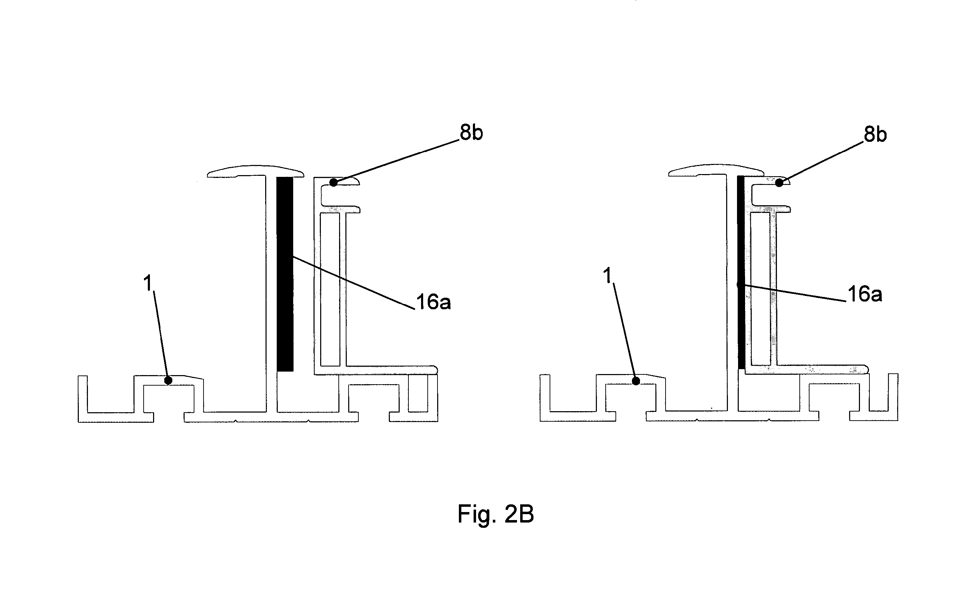

Figur 2 zeigt ein Einlegeprofil nach der vorliegenden Erfindung. Dieses Profil ist im Wesentlichen horizontal (also parallel zum First oder parallel zur Traufe) auf einem Gebäude angeordnet. Es dient nicht nur der mechanischen Funktion des Haltens eines Solarmoduls, sondern auch gleichzeitig zum Abführen des zwischen den Modulen bzw. Einlegeprofil und Modulen noch in kleineren Mengen eindringenden Regenwassers.

Um diese Aufgabe zu erfüllen, werden wie in Fig. 2A gezeigt die horizontal verlaufenden Einlegeprofile 1 durch Ablaufrinnen 10a, 10b, 10c, 10d ergänzt. Diese Ablaufrinnen sammeln das eindringende Regenwasser 9 und führen es seitlich in die vertikal verlaufenden Halteprofile. Auch diese Halteprofile weisen Rinnen auf, die das Regenwasser dann in die Dachrinne ableiten. Fig. 2B zeigt eine zusätzliche Dichtung 16a, mit der die Einlegeprofile 1 zur besseren Abdichtung ausgerüstet sein können.

Um das erfindungsgemäße System auf unterschiedlichen Dachunterkonstruktionen einsetzen zu können, weist es vorteilhafterweise zwei unterschiedliche Ausführungsformen auf:

### Pfettendächer

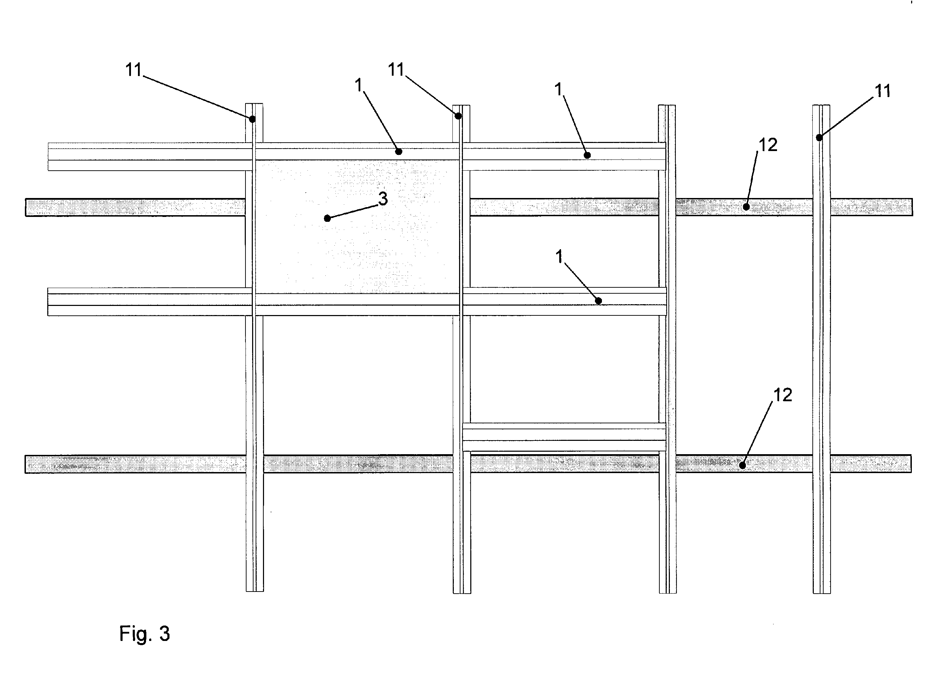

Unter einem Pfettendach, wie es in Fig. 3 dargestellt ist, wird in der vorliegenden Beschreibung eine Dachkonstruktion verstanden, die parallel zu Traufe und First verlaufende, tragende Dachbalken/Pfetten 12 aufweist. Senkrecht zu diesen Pfetten werden die Halteprofile 11 der vorliegenden Erfindung im Raster der Solarmodule (Modulbreite + Abstand der Solarmodule voneinander) befestigt. Üblicherweise beträgt die Länge und die Breite der gerahmten Module 3 zwischen 60 und 200 cm. Bei dieser Variante weisen die Halteprofile vorteilhafterweise die Form eines T-Trägers auf, um eine möglichst hohe Steifigkeit in Längsrichtung des Profils zu erzielen und somit auch größere Pfettenabstände überspannen zu können.

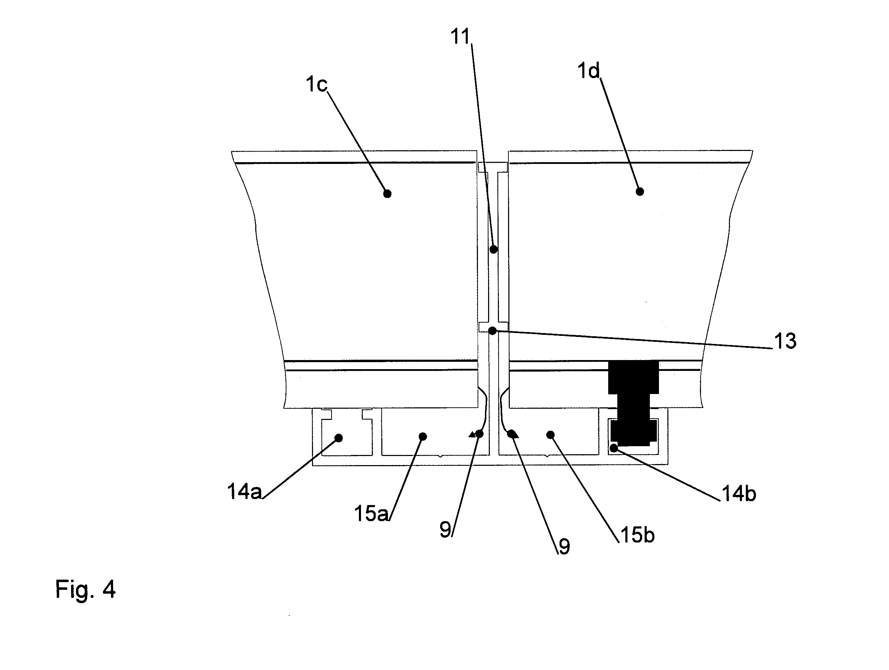

Aus Fig. 4 geht hervor, dass die Halteprofile 11 Schraubkanäle 14 zur Befestigung der Einlegeprofile 1 aufweisen. Weiterhin weisen die Halteprofile 11 rechts und links jeweils mindestens eine Abstandssicke/Ablaufsteg 13 auf, damit eindringendes Regenwasser 9 ungehindert in die Ablaufrinnen 15 der Halteprofile 11 ablaufen kann. Die Einlegeprofile 1 werden auf den Halteprofilen mittels Schrauben + Muttern über Lochbohrungen im Einlegeprofil 1 auf den Halteprofilen 11 befestigt.

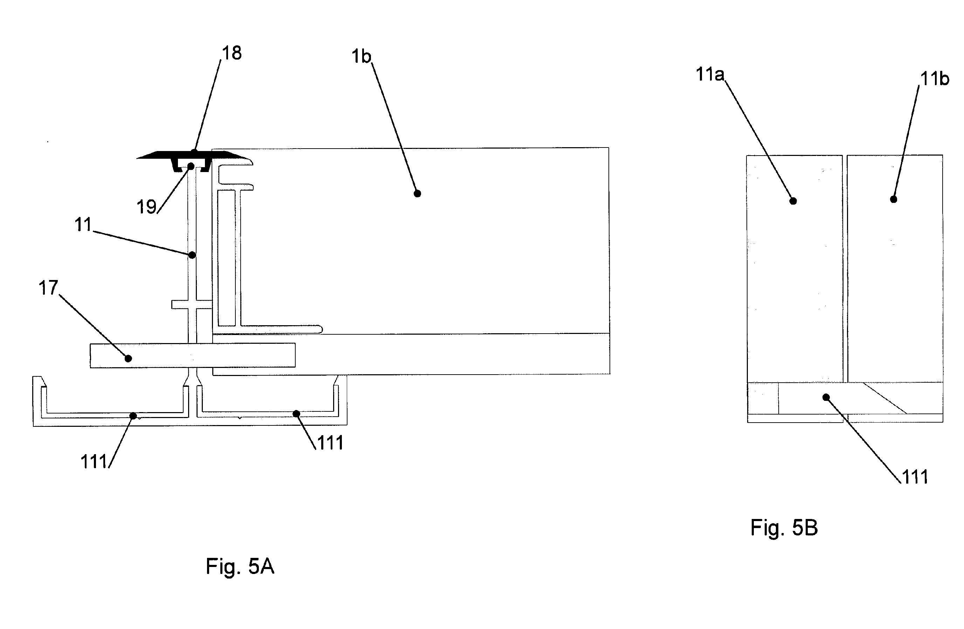

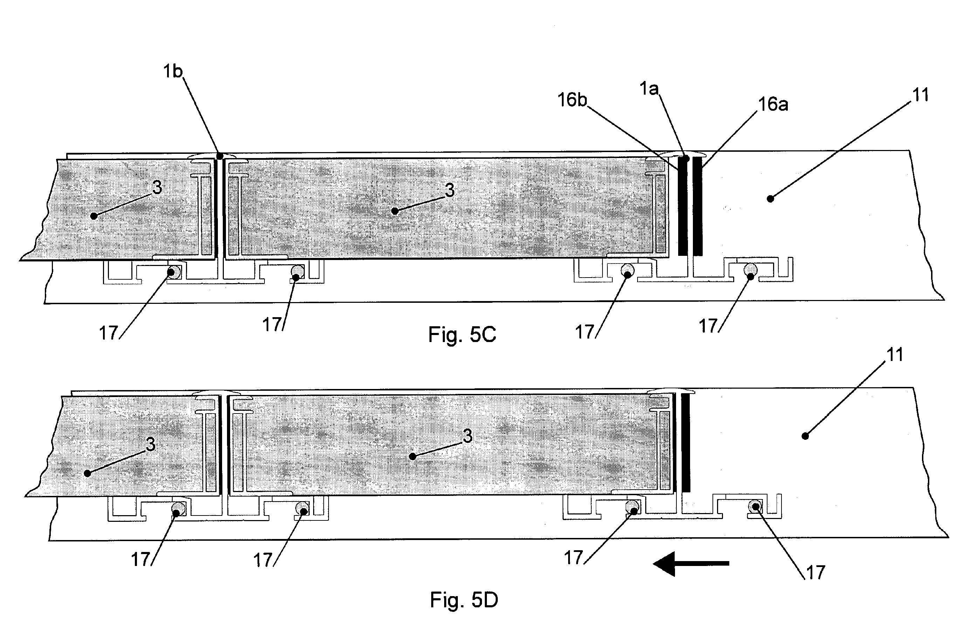

Fig. 5 zeigt eine alternative Befestigungsmöglichkeit der Einlegeprofile. In den Halteprofilen 11 werden Bolzen 17 montiert, in die die Einlegeprofile seitlich eingeschoben oder von oben eingehakt werden Die Bolzenmontage kann vorteilhafterweise vor der Dachmontage in der Werkstatt erfolgen. Im Falle der Bolzenbefestigung besteht auch die Möglichkeit, das obere Einlegeprofil erst nach Einlegen des Solarmoduls (3) in seine endgültige Position nach unten zu schieben (Fig. 5D). Das bedingt zwar eine reihenweise Montagereihenfolge der Solarmodule von unten nach oben, bietet aber die Möglichkeit, den ansonsten entstehenden Freiraum zwischen oberem Einlegeprofil und oberer Seite Solarmodul (6b) zu vermeiden bzw. an dessen Stelle eine zusätzliche Dichtung (16b) vorzusehen. Die in Fig. 5C und 5D gezeigte Variante bietet weiterhin den Vorteil, dass sich die Solarmodule nur reihenweise wieder demontieren lassen, was z.B. Diebstahl einzelner Solarmodule behindert.
Eine zusätzliche Abdichtung kann durch eine Dichtung 18 nach der Modulmontage erfolgen. Diese Dichtung 18 kann z.B. in einen an dem Halteprofil 11 dafür vorgesehenen Vorsprung 19 einrasten. Die Dichtung kann sowohl aus flexiblem Material, wie z.B. EPDM, bestehen oder auch als Profilschiene, z.B. aus Aluminium, ausgebildet sein.

In Fig. 5 ist weiterhin ein Verbindungsprofil 111 dargestellt. Dieses dient zur wasserdichten Verbindung der Ablaufrinnen zweier Halteprofile (11a und 11b), die in Abständen von ca. 6 m gestoßen werden, um Wärmedehnungen in den entstehenden Stoßfugen ausgleichen zu können.

### Sparrendächer

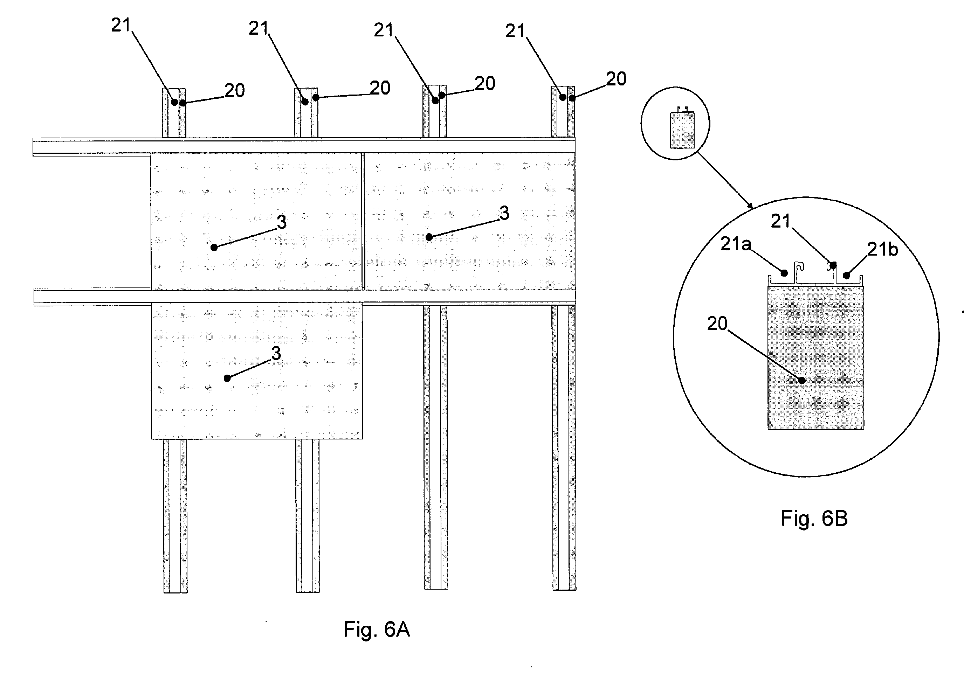

Unter einem Sparrendach, wie es in Fig. 6A dargestellt ist, wird in der vorliegenden Beschreibung eine Dachkonstruktion verstanden, die von der Traufe zum First verlaufende, tragende Dachsparren 20 aufweist. Anstelle der Dachsparren kann auch eine beliebige andere tragende Konstruktion, wie z.B. ein Trapezblech (quer zur Wasserablaufrichtung, nur als Tragkonstruktion) oder ein Gitterträger, zum Einsatz kommen. Da die vertikalen Halteprofile 21 der vorliegenden Erfindung zur Abtragung der Dachlasten auf den Dachsparren (wie oben beschrieben ebenfalls in Richtung Traufe-First) montiert werden, weisen die Halteprofile den gleichen Abstand voneinander auf wie die Dachsparren. Die seitlichen Abstände dieser Dachsparren sind üblicherweise 60 bis 100 cm und weichen daher in der Regel von den Rahmenabmessungen der PV-Module ab. Letztere liegen zwar in der gleichen Größenordnung wie die üblichen Sparrenabstände, sind aber je nach verwendetem Modultyp unterschiedlich. In der Regel ist es daher nicht möglich, das seitliche Rastermaß des Modulfeldes (entsprechend Modulbreite + Abstand der Module voneinander) an das Sparrenraster anzupassen.

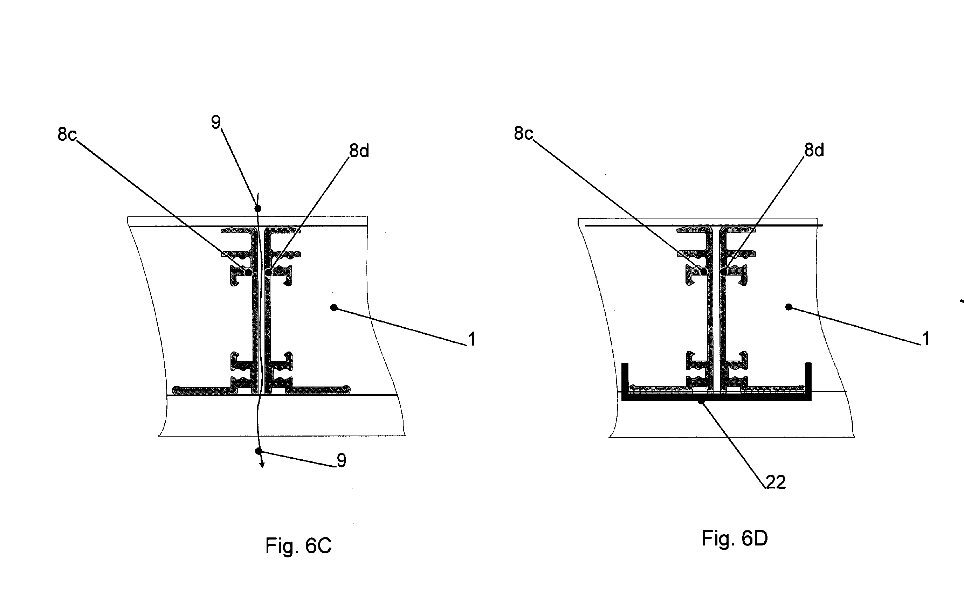

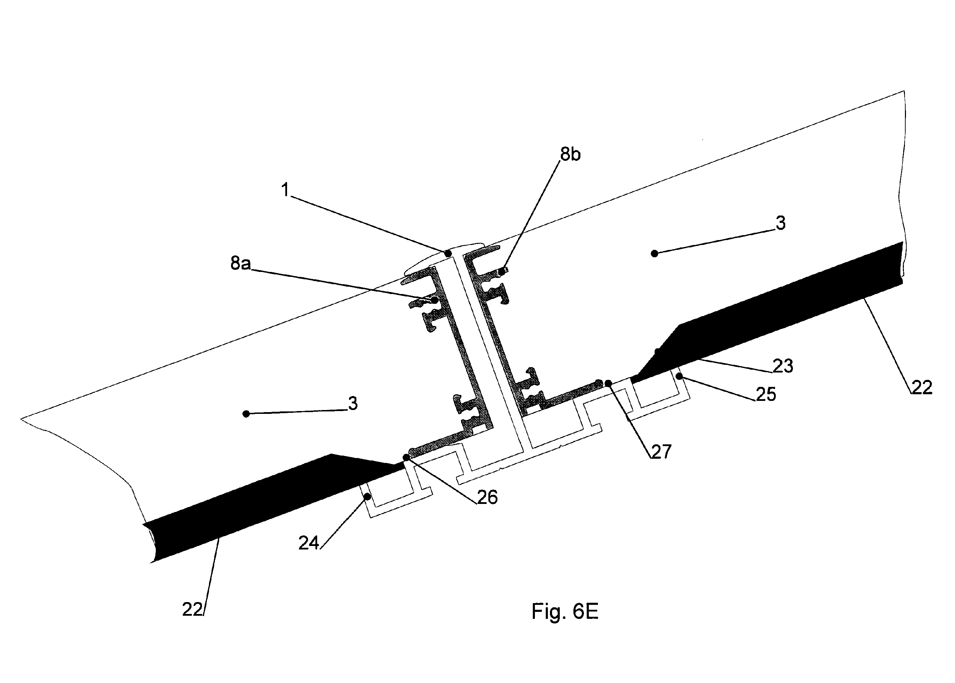

Wie in Fig. 6C dargestellt, könnte daher durch die seitlichen Modulstöße zwischen rechtem 8c und linkem 8d Solarmodul eindringendes Regenwasser 9 auf die Dachunterkonstruktion gelangen und würde diese auf Dauer zerstören. Um dies zu vermeiden, befinden sich, wie in Fig. 6D gezeigt, an den Stößen zweier nebeneinander liegender Solarmodule 8c und 8d U-förmige Profile 22, in denen das durch den Modulstoß eindringende Regenwasser aufgefangen und in die oberen Ablaufrinnen 10a und 10d, Fig. 2A) des darunter liegenden Einlegeprofils abgeleitet wird. Fig. 6E zeigt, dass das U-Profil an seinen Enden mit einer Schräge 23 versehen sein kann, um das Einlegen der Solarmodule zu erleichtern. Weiterhin weisen die untere 24 und die obere 25 Kante des Einlegeprofils gegenüber der unteren 26 und der oberen Auflagefläche 27 einen Höhenversatz auf, der gleich der Materialstärke des U-Profils 22 ist, um eine gleichmäßige Auflage des Modulrahmens auf den Auflageflächen 26 und 27 sowie der Sohle des U-Profils 22 sicherzustellen.

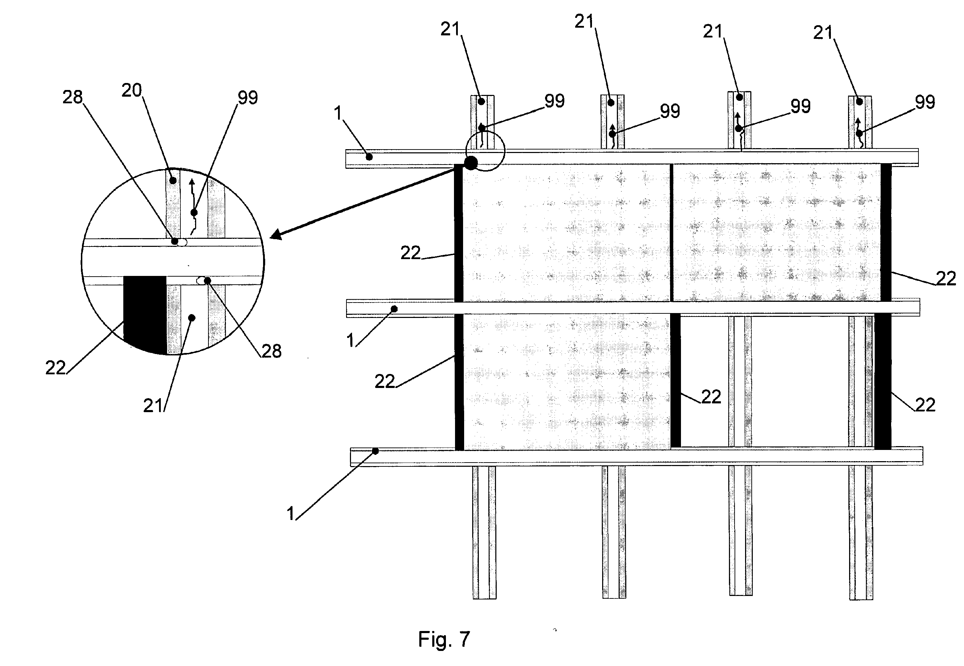

Wie Fig. 7 zeigt, werden nach Abschluss der Profilmontage die Ablaufrinnen 10a-d der Einlegeprofile jeweils oberhalb der Halteprofile 21 mit Entwässerungsbohrungen 28 versehen, um das Regenwasser 99 aus den Einlegeprofilen in die Halteprofile bzw. die Ablaufrinnen 21a und 21b der Halteprofile zu leiten.

In einer alternativen Variante verlaufen die Stöße zwischen zwei Einlegeprofilen über den Halteprofilen, so dass das Regenwasser an diesen Stößen in die Halteprofile bzw. Einlegeprofile ablaufen kann.

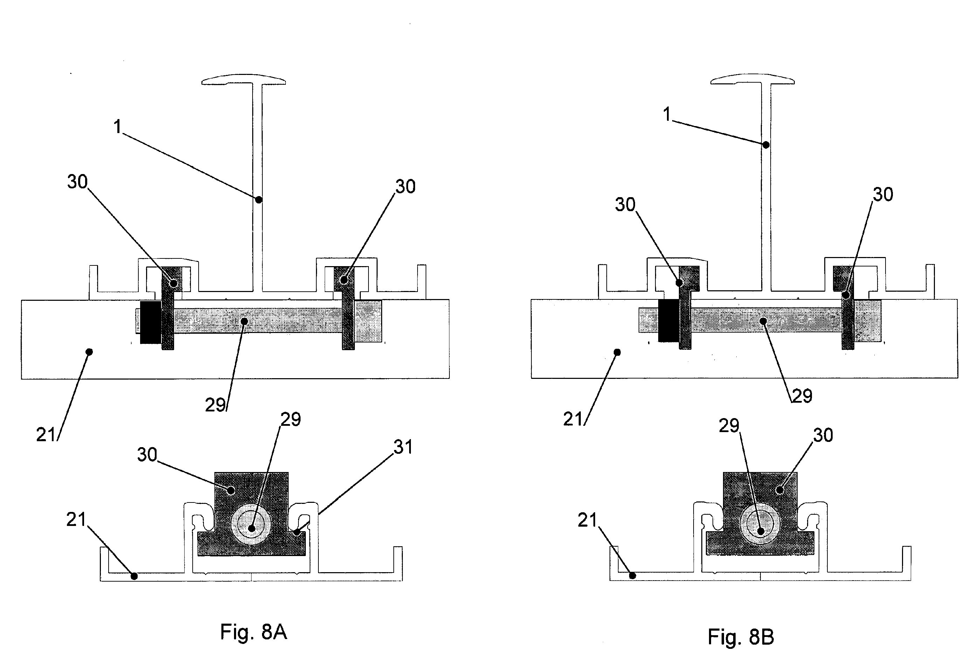

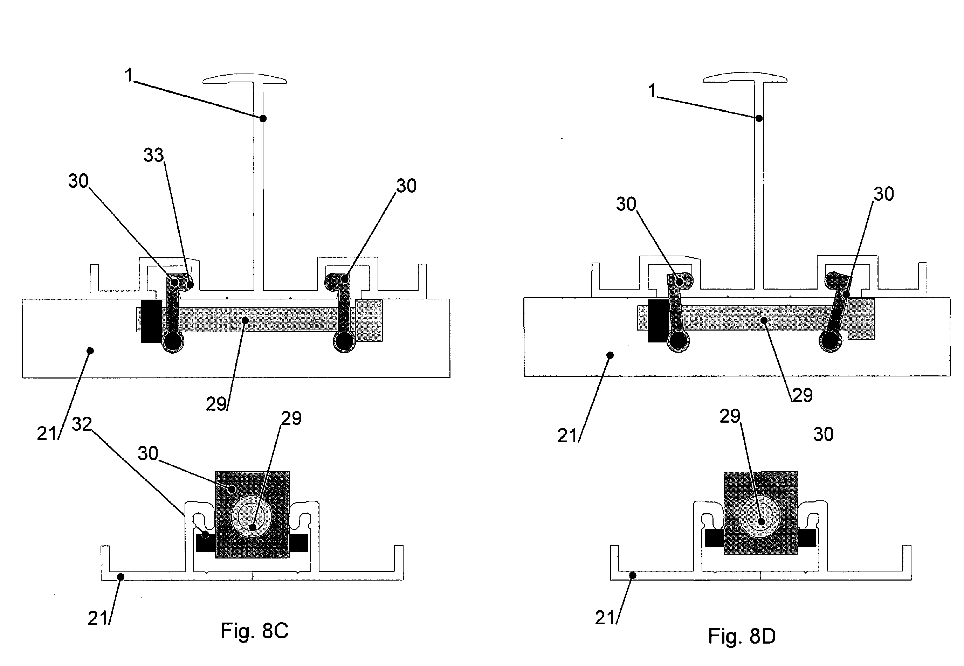

In den Figuren 8 bis 10 sind verschiedene Befestigungsmöglichkeiten für die erfindungsgemäßen Einlegeprofile und Halteprofile beschrieben. Diese Befestigungsmöglichkeiten stellen ihrerseits eigene Erfindungen dar. Andererseits bilden sie das erfindungsgemäße Solarmodulmontagesystem vorteilhaft weiter.

In Figur 4 sind mit den Vertiefungen 14a und 14b Kanäle in den Halteprofilen angeordnet, die als Schraubkanäle zur Schraubbefestigung der Einlegeprofile 1d und 1c dienen. Dabei wird in den Kanälen 14a und 14b eine Mutter festgelegt, die von einer durch ein Einlegeprofil 1c, 1d geführten Schraube erfasst wird. Auf diese Weise werden die Einlegeprofile 1c und 1d an dem Halteprofil 11 befestigt.

In Figur 5 ist eine Befestigungsmöglichkeit für das Einlegeprofil 1b an dem Halteprofil 11 mittels Bolzen 17 dargestellt.

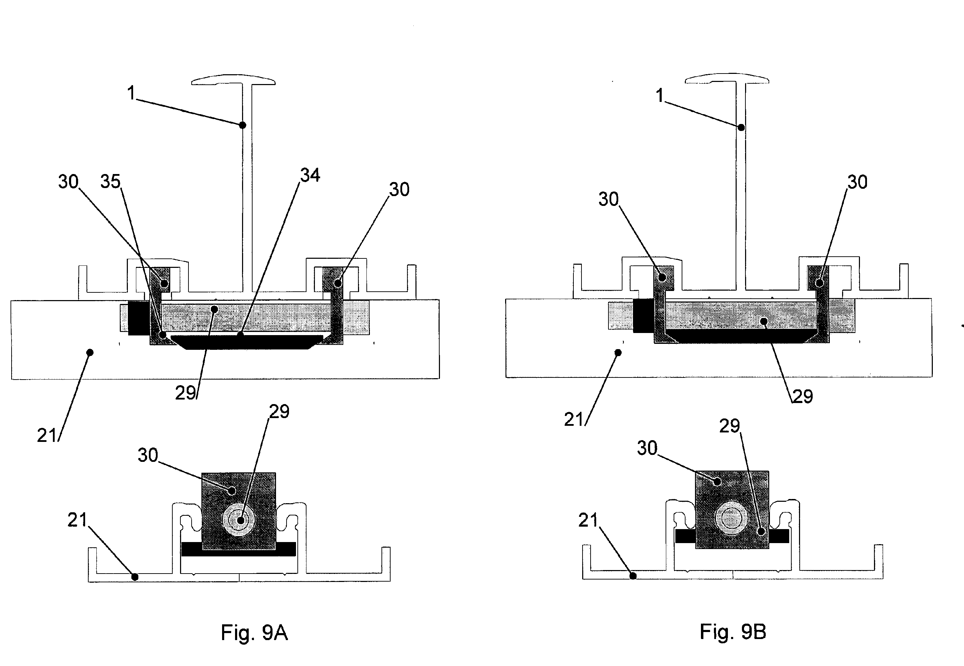

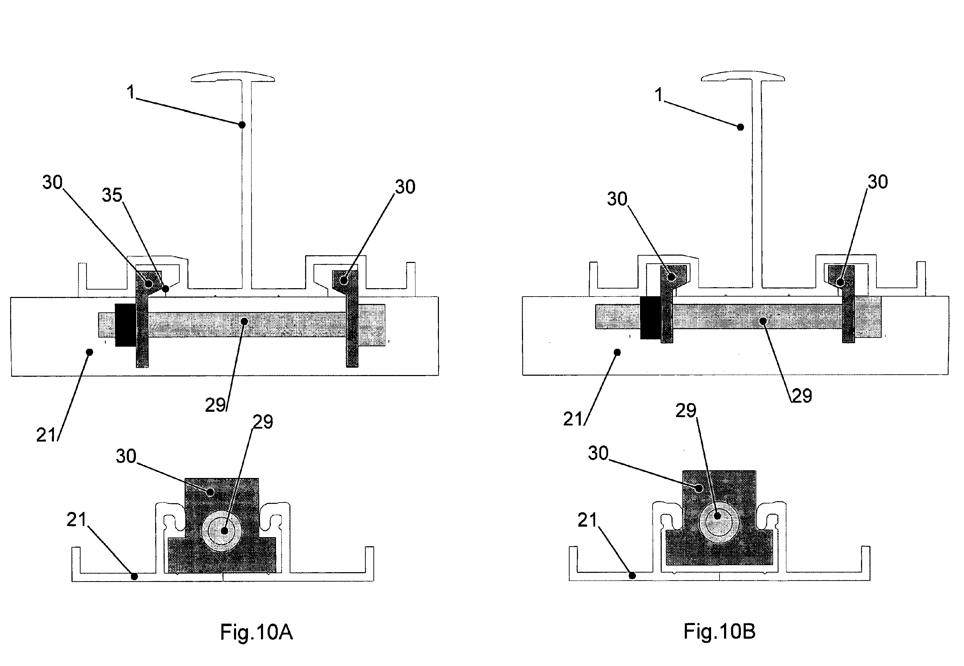

In Figur 8 ist eine Klemmbefestigung, in Figur 9 eine weitere Klemmbefestigung und in Figur 10 noch eine weitere Klemmbefestigung dargestellt.

Um Befestigungsbohrungen im Einlegeprofil zu vermeiden, kann dessen Befestigung am Halteprofil wie in Fig. 8 gezeigt durch Eindrehen bzw. Einschieben von zwei Klemmteilen 30 in den Schraubkanal des Halteprofils und Verschrauben 29 der Klemmteile miteinander erfolgen. Beim Anziehen der Schraube 29 greifen einerseits die Klemmteile 30 in entsprechende Nuten des Einlegeprofils, andererseits haken die Haltenasen 31 der Klemmteile in den Schraubkanal des Halteprofils ein. Dadurch werden Einlege- und Halteprofil aneinander gezogen und reibschlüssig miteinander befestigt. Fig. 8A zeigt die Klemmbefestigung 1 im losen, Fig. 8B im festen Zustand.

Anstelle der Haltenasen können die Klemmstücke auch Haltebolzen aufweisen, wie in Fig. 8C gezeigt. Ferner können die Klemmteile 31 an der Eingriffsseite in das Einlegeprofil Rundungen 33 aufweisen, um den Formschluss zwischen Klemmteil 31 und Einlegeprofil 1 zu verbessern.

Fig. 8C zeigt die Klemmbefestigung 2 im losen, Fig. 8D im festen Zustand.

Anstelle von Haltenasen 31 können die Klemmstücke auch über ein separates Haltestück 34 im Schraubkanal des Halteprofils befestigt werden, wie in Fig. 9A gezeigt. Beim Anziehen der Schraube wird das Haltestück 34 durch die Keilnasen 35 der Klemmteile 30 nach oben gedrückt und so Einlege- und Halteprofile reibschlüssig aneinandergedrückt. Ferner können die Klemmteile 31 an der Eingriffsseite in das Einlegeprofil Rundungen 33 aufweisen, um den Formschluss zwischen Klemmteil 31 und Einlegeprofil 1 auch bei Verdrehung der Klemmteile beim Anziehen der Schraube zu gewährleisten.

Fig. 9A zeigt die Klemmbefestigung 3 im losen, Fig. 9B im festen Zustand.

Die Druckkraft zwischen Einlege- und Halteprofil kann auch durch Keilnasen 36 an den Klemmteilen erzeugt werden, wie in Fig. 10 gezeigt. Beim Anziehen der Schraube 29 werden dadurch die Klemmteile nach oben gedrückt und ziehen dabei gleichzeitig das Halteprofil gegen das Einlegeprofil.

Fig. 10A zeigt die Klemmbefestigung 3 im losen, Fig. 10B im festen Zustand.

## Patentansprüche

1. Solarmodulmontagesystem mit etwa horizontal verlaufenden schienenförmigen Einlegeprofilen und unter einem Winkel zu den Einlegeprofilen verlaufenden schienenförmigen Halteprofilen, **dadurch gekennzeichnet, dass**
die Einlegeprofile doppel-T-förmig mit einem längs der ersten Halteschienen sich erstreckenden Mittelsteg und an dessen beiden Längskanten ausgebildeten zu beiden Seiten abstehenden ersten Flanschen ausgebildet sind zum Einlegen von Solarmodulen zwischen die beiden auf einer Seite des Mittelsteges ausgebildeten ersten Flansche, wobei in dem die untere Auflagefläche bildenden ersten Flansch eine sich über die Länge des Einlegeprofils erstreckende Vertiefung zum Ableiten von Flüssigkeit längs der Einlageprofile vorgesehen ist, und
die Halteprofile T-förmig mit einem Mittelsteg und einem an dessen einer Längskante ausgebildeten zu beiden Seiten abstehenden zweiten Flansch als Auflagefläche für die Auflageprofile, wobei in dem eine Auflage bildenden Flansch eine sich über die Länge des Halteprofils erstreckende Vertiefung zum Ableiten von Flüssigkeit längs des Halteprofils vorgesehen ist.

2. Solarmodulmontagesystem nach dem vorhergehenden Anspruch, **dadurch gekennzeichnet, dass** die Halteprofile zu beiden Seiten aus dem Mittelsteg hervorragende Abstandselemente, insbesondere längs des Halteprofils verlaufende Stege aufweist.

3. Solarmodulmontagesystem nach einem der vorhergehenden Ansprüche, **dadurch gekennzeichnet, dass** auf den Einlegprofilen zwischen den Halteprofilen nach oben geöffnete U-förmige Dichtprofile zur Ableitung von an der Stoßstelle zwischen zwei Solarmodulen eindringender Flüssigkeit zu demjenigen Einlegeprofil, auf dem das Dichtprofil an seinem unteren Ende aufliegt.

4. Solarmodulmontagesystem nach einem der vorhergehenden Ansprüche, **dadurch gekennzeichnet, dass** der untere und/oder obere Flansch des Einlegprofils, auf dem das Dichtprofil aufliegt, das von oben oder unten in das Einlegeprofil eingelegt ist, eine Auflagefläche für das Dichtprofil bildet, die um die Dicke des U-Profils von der Auflagefläche für das Solarmodul abgesetzt ist, so dass die Oberfläche des Dichtprofils zusammen mit der Auflagefläche des Flansches für das Solarmodul eine kontinuierliche, ebene Auflagefläche für das Solarmodul bilden.

5. Solarmodulmontagesystem nach einem der vorhergehenden Ansprüche, **dadurch gekennzeichnet, dass** an dem Mittelsteg des Einlegeprofils auf der dem oberen Solarmodul zugewandten Fläche eine Dichtung angeordnet ist.

6. Solarmodulmontagesystem nach einem der vorhergehenden Ansprüche, **dadurch gekennzeichnet, dass** am oberen Ende des Mittelstegs des Haltemoduls eine Dichtung aufweist, die die obere Kante eines eingelegten Solarmoduls überdeckt.

7. Solarmodulmontagesystem nach einem der vorhergehenden Ansprüche, **dadurch gekennzeichnet, dass** die Einlegeprofile waagrecht und/oder die Halteprofile senkrecht zu den Einlegeprofilen angeordnet sind.

8. Solarmodulmontagesystem nach einer der vorhergehenden Ansprüche, **dadurch gekennzeichnet, dass** die Einlegeprofile auf den Halteprofilen mittels Verschraubung, insbesondere in dafür vorgesehenen Schraubkanälen der Halteprofile und/oder mittels Lochbohrungen in den Einlegeprofilen, oder mittels Bolzen in den Halteprofilen und zugehörigen Aussparungen in den Einlegeprofilen befestigt werden.

9. Gebäudeaußenhülle, insbesondere Dachhaut, **dadurch kennzeichnet, dass** auf dem Gebäude, insbesondere Dach, ein Solarmodulmontagesystem nach einem der vorhergehenden Ansprüche angeordnet sowie in das Solarmodulmontagesystem mindestens ein Solarmodul eingelegt ist.
